# EUROPÄISCHE PATENTSCHRIFT

(11) **EP 3 388 811 B1**
(45) Veröffentlichungstag und Bekanntmachung des Hinweises auf die Patenterteilung: **06.07.2022**
(21) Anmeldenummer: 18166838.5
(22) Anmeldetag: 11.04.2018
(51) Int. Cl.: G01M 3/28, F17D 5/02, E03B 7/00

(54) **VORRICHTUNG UND VERFAHREN ZUR ERKENNUNG EINER UNDICHTIGKEIT IN EINEM ROHRLEITUNGSSYSTEM FÜR EIN FLUID**
DEVICE AND METHOD FOR DETECTING A LEAK IN A PIPING SYSTEM FOR A FLUID
DISPOSITIF ET PROCÉDÉ DE DÉTECTION D'UNE FUITE DANS UN SYSTÈME DE CONDUITE POUR UN FLUIDE

(30) Priorität: 11.04.2017 EP 17165993
(43) Veröffentlichungstag der Anmeldung: 17.10.2018
(73) Patentinhaber: Softmeter GmbH, 60439 Frankfurt am Main (DE)
(72) Erfinder: Gottschling, Florian, 61440 Oberursel (DE); Häferer, Andreas, 64546 Mörfelden-Walldorf (DE); Reddehase, Axel, 60431 Frankfurt am Main (DE)
(74) Vertreter: Keil & Schaafhausen Patentanwälte PartGmbB

(56) Entgegenhaltungen:
- WO-A1-2013/076721
- DE-A1- 19 608 527
- US-A1- 2008 184 781

## Beschreibung

Die Erfindung betrifft eine Vorrichtung zur Erkennung einer Undichtigkeit in einem Rohrleitungssystem für ein Fluid. Das Fluid wird dem Rohrleitungssystem (z.B. in einem Gebäude, einer Wohneinheit oder einer industriellen Einheit) in der Regel mittels einer Zuführungsleitung von einem vorgelagerten, druckerhaltenden System (z.B. kommunales Wasser- oder Gasversorgungssystem) zugeführt, in dem auch der Zähler für den Verbrauch des Fluids angeordnet ist. In dem Rohrleitungssystem ist mindestens eine Entnahmestelle für das Fluid vorgesehen. Die Erfindung betrifft weiter ein entsprechendes Verfahren sowie eine entsprechende Vorrichtung zur Datenverarbeitung, ein entsprechendes Computerprogrammprodukt sowie ein entsprechendes computerlesbares Speichermedium.

Das Rohrleitungssystem nach der vorliegenden Erfindung umfasst insbesondere eine Vielzahl von miteinander verbundenen Rohren, in denen das jeweilige Fluid einem Nutzer oder Verbraucher zur Entnahme zugeführt wird. Der Nutzer oder Verbraucher entnimmt das Fluid an den betreffenden Entnahmestellen. Die Rohre sind mittels Verbindungselementen (zum Beispiel Rohrmuffen) miteinander verbunden. Es können Ventile oder andere, den Masse- und/oder Volumendurchfluss steuernde Elemente in dem Rohrleitungssystem vorgesehen sein. Weiter kann das Rohrleitungssystem mindestens ein Untersystem aufweisen, z.B. ein Untersystem für warmes Wasser und ein Untersystem für kaltes Wasser. Jedes Untersystem bildet dabei einen Teil des Rohrleitungssystems und ist mit dem restlichen Teil des Rohrleitungssystems oder dem mindestens einen anderen Untersystem verbunden. Das Rohrleitungssystem ist mittels der Zuführungsleitung an das vorgelagerte Netz zur Versorgung mit dem Fluid angeschlossen.

Undichtigkeiten (Leckagen) in Rohrleitungssystemen für Fluide wie Wasser, Erdgas, Benzin oder dergleichen Flüssigkeiten oder Gase stellen heute ein großes Problem dar. Dieses Problem existiert nicht nur aufgrund ökologischer Betrachtung, weil der fluide Rohstoff wie Wasser oder Erdgas für den weiteren Gebrauch verloren geht. Es können durch den Austritt von Wasser oder Erdgas an den Gebäuden oder sonstigen Einheiten, die das Rohrleitungssystem führen, auch beträchtliche Schäden erzeugt werden, die häufig erst so spät bemerkt werden, dass die Beseitigung des Schadens beispielsweise für einen Wohnungsbesitzer finanziell sehr aufwändig ist. Zusätzlich kann die Wohnqualität aufgrund von Schimmelbildung in feuchten Mauern beeinträchtigt werden.

Die Undichtigkeiten entstehen beispielsweise durch Alterung, Lochfraß oder durch Verwerfungen des umgebenden Erdreichs, die zu Spannungen in Rohren führen. Undichtigkeiten können auch aufgrund von Defekten in den mit dem Rohrleitungssystem verbundenen installierten Einrichtungen entstehen. Die Erkennung von Undichtigkeiten wird dadurch erschwert, dass das Fluid in stark schwankender Menge durch das Rohrleitungssystem fließt. Dennoch können auch kleine Undichtigkeiten über einen längeren Zeitraum einen erheblichen Schaden anrichten.

Daher besteht das Bedürfnis, Undichtigkeiten in Rohrleitungssystemen möglichst früh und sicher zu erkennen. Die Aufwendungen für eine solche Erkennung von Undichtigkeiten in Rohrleitungssystemen dürfen jedoch finanziell und bautechnisch nicht zu aufwändig gestaltet sein, um die Akzeptanz einer Erkennungsvorrichtung bzw. eines Erkennungsverfahrens am Markt zu fördern.

Aus den Druckschriften US 2008/0184781 A1, WO 2013/076721 A1 und DE 196 08 527 A1 sind Vorrichtungen bzw. Verfahren bekannt, mit denen eine Undichtigkeit in einem Leitungssystem festgestellt werden kann oder die automatisch ein solches System verschließen.

In der Druckschrift DE 197 01 317 A1 wird eine Leckerkennung in Rohrleitungssystemen offenbart, bei der die durchfließende Menge eines flüssigen Stoffes in an sich bekannter Weise automatisch erfasst wird, wobei die Erfassung in Zeiten des niedrigsten Durchflusses über einen längeren Zeitraum erfolgt. Hieraus werden Durchschnittswerte errechnet und diese Durchschnittswerte auf langsam steigende Mengen untersucht, wobei Ausreißer, die bestimmte Grenzen überschreiten, nicht für die Mittelwertbildung herangezogen werden. Das bekannte Verfahren eignet sich grundsätzlich insbesondere für die Erkennung von kleineren Leckagen, ist jedoch vergleichsweise unsicher.

Die Druckschrift DE 197 06 564 A1 beschreibt eine Leckwasser-Erfassungs- und Stoppeinrichtung für den Haushalt, die kompliziert aufgebaut ist. Die Einrichtung umfasst beispielsweise eine mikroprozessorgesteuerte Regeleinrichtung zur Steuerung eines Absperrungselements, welche nach vorbestimmten oder programmierbaren Algorithmen aus Sensormeldungen Leckagen erkennt, Drossel- oder Absperrvorgänge einleitet sowie Warn- und Hinweissignale aussendet. Weiter können mehrfach angeordnete Sensoren für die Erkennung von Undichtigkeiten in Anspruch genommen werden. Die bekannte Einrichtung leitet beispielsweise einen Absperrvorgang ein bei Überschreiten einer vorbestimmten Durchflussmenge, bei einer Abweichung der Durchflussweise von einem auf einem adaptiven Weg gefundenen und gespeicherten Verbrauchsmuster des Haushalts oder bei dafür vorbestimmten Sensormeldungen.

Die Druckschrift DE 198 14 903 C2 offenbart ein sehr allgemeines Verfahren zum vorbeugenden Absperren einer Versorgungsleitung für ein Medium in Abhängigkeit von den Konsumgewohnheiten der Benutzer, bei dem die Gewohnheiten der Benutzer über eine Druckmessung in Leitungen als Kriterium für die Feststellung einer Undichtigkeit im Rohrleitungssystem ausgewertet werden. Für ein derartiges Verfahren müssen über einen längeren Zeitraum die Nutzergewohnheiten beobachtet werden, um verlässliche Kriterien festzulegen, mit denen Undichtigkeiten sicher erkannt werden können. Dieses funktioniert gut, solange die Benutzer an ihren Gewohnheiten festhalten. Wenn die Benutzer ihre Gewohnheiten sprunghaft ändern, ist das bekannte Verfahren jedoch nicht sehr praktikabel.

Schließlich wird in der Druckschrift DE 44 40 714 C2 ein Verfahren zum vorbeugenden Absperren von medienbeaufschlagten Versorgungsleitungen mit einem Hauptventil und einer oder mehrerer Entnahmestellen beschrieben. Bei geschlossenem Hauptventil wird eine Druckverlustmessung zwischen Hauptventil und den Entnahmestellen durchgeführt, um Undichtigkeiten in den Versorgungsleitungen festzustellen. Dieses Verfahren beruht auf der Feststellung, dass bereits geringste Undichtigkeiten zu einem messbaren Druckverlust in den Versorgungsleitungen führen. Wird ein Druckverlust zwischen Hauptventil und der Entnahmestelle gemessen, so bleibt das Hauptventil auch bei Anwesenheit eines Nutzers an einer oder mehreren Entnahmestellen geschlossen, um weitere Verluste zu vermeiden und den Schaden zu beheben.

Die Aufgabe der vorliegenden Erfindung besteht somit darin, eine Vorrichtung zu schaffen, mit der eine Undichtigkeit früh und sicher erkannt werden kann und die in technischer und finanzieller Hinsicht wenig aufwändig ist. Entsprechend besteht die Aufgabe darin, ein kostengünstiges Verfahren zur frühen und sicheren Erkennung von Undichtigkeiten in einem Rohrleitungssystem anzugeben. Gleiches gilt auch für die Vorrichtung zur Datenverarbeitung, das Computerprogrammprodukt sowie das computerlesbare Speichermedium.

Die Aufgabenstellung wird gelöst durch die in Anspruch 1 angegebene Vorrichtung.

Die erfindungsgemäße Vorrichtung weist insbesondere
- eine Durchflussmesseinrichtung, welche in der Zuführungsleitung angeordnet ist, und
- eine Datenverarbeitungseinrichtung auf, welche mit der Durchflussmesseinrichtung verbunden ist.

Erfindungsgemäß misst die Durchflussmesseinrichtung kontinuierlich oder zumindest in vorgebbaren Zeitabständen, z.B. alle 0,01 Sekunden bis 5 Sekunden, den Masse- und/oder Volumendurchfluss an Fluid durch die Zuführungsleitung und übermittelt die gemessenen Werte des Masse- und/oder Volumendurchflusses an die Datenverarbeitungseinrichtung,
wobei die Datenverarbeitungseinrichtung derart eingerichtet ist, dass mindestens ein Zustand SMARTLOCK und ein Zustand OPEN unterschieden wird und dass in jedem der Zustände SMARTLOCK und OPEN eine durch die Zuführungsleitung durchgeflossene Masse- und/oder Volumenentnahme des Fluids basierend auf den gemessenen Werten des Masse- und/oder Volumendurchflusses ermittelbar ist ab einem Zeitpunkt, an dem der gemessene Masse- und/oder Volumendurchfluss einen vorgebbaren ersten Minimaldurchflusswert (jeweils entsprechend Massendurchflusswert oder Volumendurchflusswert) überschreitet, und solange der gemessene Masse- und/oder Volumendurchfluss einen vorgebbaren zweiten Minimaldurchflusswert (jeweils entsprechend Massendurchflusswert oder Volumendurchflusswert) nicht unterschreitet. Erfindungsgemäß ist die Datenverarbeitungseinrichtung weiter derart eingerichtet, dass
- in dem Zustand OPEN durch die Datenverarbeitungseinrichtung eine Ausgabe einer vorgebbaren ersten Warnmeldung erfolgt, wenn die aktuelle Masse- und/oder Volumenentnahme einen vorgebbaren ersten Entnahmegrenzwert (jeweils entsprechend Masse- oder Volumenentnahmegrenzwert) überschreitet,
- in dem Zustand SMARTLOCK durch die Datenverarbeitungseinrichtung eine Ausgabe einer vorgebbaren zweiten Warnmeldung erfolgt, wenn die aktuelle Masse- und/oder Volumenentnahme einen vorgebbaren zweiten Entnahmegrenzwert (jeweils entsprechend Masse- oder Volumenentnahmegrenzwert) überschreitet, wobei der zweite Entnahmegrenzwert kleiner als der erste Entnahmegrenzwert ist,
- ein automatischer Übergang von dem Zustand SMARTLOCK in den Zustand OPEN dann erfolgt, wenn der aktuell durch die Durchflussmesseinrichtung gemessene Masse- und/oder Volumendurchfluss nach Überschreiten des ersten Minimaldurchflusswerts (MIN) anschließend den zweiten Minimaldurchflusswert unterschreitet und die aktuelle Masse- und/oder Volumenentnahme kleiner ist als der zweite Entnahmegrenzwert.

Ein Fluid im Rahmen der vorliegenden Erfindung ist eine beliebige Flüssigkeit oder ein Gas. Derartige Fluide sind beispielsweise Wasser, Erdgas, Benzin oder dergleichen. Das Rohrleitungssystem ist an ein äußeres, vorgelagertes, druckerhaltendes System angeschlossen, das das Fluid immer unter einem Druck zur Verfügung stellt, der höher ist als der Umgebungsdruck außerhalb des Rohrleitungssystems und des äußeren Systems. Der Druck des Fluids in dem äußeren System und in dem Rohrleitungssystem ist gleich, zeitweise können sich der Druck in dem äußeren System und der Druck in dem Rohrleitungssystem unterscheiden. Weiter ist von Bedeutung, dass das Rohrleitungssystem bis auf die vorgesehene(n) Entnahmestelle(n) und die eine oder mehrere Zuführungsleitung(en) (und ggf. die auftretende und zu detektierende Undichtigkeit) abgeschlossen ist. Hinsichtlich einer Wasser-Hausinstallation ist das vorgelagerte, druckerhaltende System das z.B. kommunale Wasserversorgungsnetz. Erdgas wird mit dem z.B. kommunalen Erdgasversorgungsnetz als vorgelagertes, druckerhaltendes System zu Verfügung gestellt. In einem alternativen Beispiel entspricht eine Gasflasche einem druckerhaltenden System und die Zuleitung zum Grill dem Rohrleitungssystem. Die Durchflussmesseinrichtung ist an dem Ventil der Gasflasche angebracht.

Entnahmestellen sind Punkte im Rohrleitungssystem, an denen durch eine auf eine gewollte Entnahme gerichtete Handlung direkt (zum Beispiel durch Öffnen eines Wasserhahns) oder indirekt (zum Beispiel mittels einer Waschmaschine) ein Fluidvolumen aus dem Rohrleitungssystem entnommen werden kann.

Eine Undichtigkeit oder Leckage ist eine Stelle im Rohrleitungssystem, an der unbeabsichtigt, beispielsweise aufgrund eines Loches oder eines Risses oder eines Defekts an einer installierten Einrichtung an einer Entnahmestelle (z.B. tropfender Wasserhahn) oder eines sonstigen Defekts oder Schwachstelle in den Rohren, Verbindungselementen oder Entnahmestellen des Rohrleitungssystems, Fluid aus dem Rohrleitungssystem in die Umgebung entweicht. An der Stelle einer Undichtigkeit findet sozusagen eine "ungewollte" Entnahme eines Fluidmasse oder eines Fluidvolumens statt.

Die vorliegende Erfindung ist sowohl für ein Rohrleitungssystem anwendbar, die lediglich eine einzige Zuführungsleitung aufweisen, die das vorgelagerte, druckerhaltende System mit dem Rohrleitungssystem verbindet, als auch für ein Rohrleitungssystem, das mehrere derartige Zuführungsleitungen aufweist. In dem zuletzt genannten Fall muss in jeder Zuführungsleitung jeweils eine Durchflussmesseinrichtung vorgesehen sein, welche kontinuierlich oder zumindest in den vorgebbaren Zeitabständen den Masse- und/oder Volumendurchfluss an Fluid durch die jeweilige Zuführungsleitung misst und die gemessenen Werte des Masse- und/oder Volumendurchflusses an die Datenverarbeitungseinrichtung übermittelt, die alle Masse- und/oder Volumendurchflüsse aller Zuführungsleitungen erfasst. Es versteht sich, dass die Datenverarbeitungseinrichtung in diesem Fall alle Volumendurchflüsse in allen Zuführungsleitungen summiert und die Summe für den Vergleich mit dem ersten Minimaldurchflusswert und dem zweiten Minimaldurchflusswert sowie die Bestimmung der Masse- und/oder Volumenentnahme heranzieht. Diese Vorgehensweise und Ausgestaltung der Datenverarbeitungseinrichtung bzw. der Vorrichtung soll im Folgenden mit umfasst sein, wenn die Erfindung nachfolgend für den Fall mit lediglich einer einzigen Zuführungsleitung erläutert wird.

Als Durchflussmesseinrichtung können alle gängigen Durchflussmesser eingesetzt werden, welche als Durchfluss- oder Mengenmessgeräte in geschlossener Rohrleitung eingesetzt werden können, beispielsweise magnetisch-induktive Durchflussmesser, Schwebekörper-Durchflussmesser, Ultraschall-Durchflussmesser, Messblenden, Staudrucksonden, Coriolis Massedurchflussmesser, thermische Durchflussmesser, Vortex-Massedurchflussmesser, Flügelradzähler, Schraubenradzähler, Turbinenrad-Durchflussmesser, Woltmannzähler, Drall-Durchflussmesser, Vortex-Durchflussmesser, Balgenzähler, Drehkolbenzähler, Kolbenzähler, Ovalradzähler, Ringkolbenzähler, Treibschieberzähler, Zahnrad-Durchflussmesser.

Die erfindungsgemäße Vorrichtung kann mindestens zwei Zustände unterscheiden, nämlich den Zustand SMARTLOCK (erster Zustand) und den Zustand OPEN (zweiter Zustand). Die Datenverarbeitungseinrichtung besitzt einen Speicherabschnitt, dessen Inhalt den jeweiligen Zustand der Vorrichtung verwaltet. Der Inhalt des Speicherabschnitts kann entsprechend bei einer Zustandsänderung durch die Datenverarbeitungseinrichtung geändert oder zur Abfrage des jeweiligen Zustands durch die Datenverarbeitungseinrichtung ausgelesen werden. Beispielsweise besitzt der Speicherabschnitt den Inhalt "0", wenn sich die Vorrichtung im Zustand SMARTLOCK befindet, und den Inhalt "1", wenn sich die Vorrichtung im Zustand OPEN befindet.

Sowohl in dem Zustand SMARTLOCK als auch in dem Zustand OPEN wird durch die Datenverarbeitungseirichtung ab dem Zeitpunkt des Überschreitens des ersten Minimaldurchflusswerts die durch die Zuführungsleitung durchgeflossene, aktuelle Masse- und/oder Volumenentnahme des Fluids basierend auf den gemessenen Werten des Masse- und/oder Volumendurchflusses ermittelt. Die beiden Zustände unterscheiden sich jedoch durch ihren Entnahmegrenzwert.

Die erfindungsgemäße Vorrichtung startet in dem Zustand SMARTLOCK, welcher auch den Ausgangszustand bildet in dem eine Entnahme von Fluid an sich unerwünscht ist und in dem bei einem mittels der Durchflussmesseinrichtung gemessenen Masse- und/oder Volumendurchfluss an Fluid durch die Zuführungsleitung eine Undichtigkeit vermutet wird. Entsprechend erfolgt die Ausgabe einer ersten Warnmeldung dann, wenn die aktuelle Masse- und/oder Volumenentnahme einen vergleichsweise niedrigen, ersten Entnahmegrenzwert (z.B. 10 I für Wasser) überschreitet. Erfindungsgemäß hat der Nutzer jedoch die Möglichkeit, mittels einer definierten Entnahme von Fluid aus dem Rohrleitungssystem an einer Entnahmestelle, d.h. einer Entnahme, die vor dem Erreichen des ersten Entnahmegrenzwerts beendet wird, den Zustand SMARTLOCK zu verlassen. In diesem Fall erfolgt automatisch ein Übergang in den Zustand OPEN, in dem eine höheres Entnahmevolumen an Fluid erlaubt ist, welche nicht zur Einstufung einer Undichtigkeit führen, solange ein höherer Grenzwert (zweiter Entnahmegrenzwert) nicht überschritten wird. Beim automatischen Übergang von dem Zustand SMARTLOCK in den Zustand OPEN wird der Inhalt des Speicherabschnitts der Datenverarbeitungseinrichtung in dem obigen Beispiel von "0" auf "1" geändert. Aufgrund des geänderten Inhalts des Speicherabschnitts erkennt die erfindungsgemäße Vorrichtung, dass der für den Zustand OPEN vorgesehene höhere erste Entnahmegrenzwert gilt.

Nach der Erfindung kann der Nutzer daher durch eine bewusste Handlung dem Rohrleitungssystem bzw. der erfindungsgemäßen Vorrichtung signalisieren, dass der nachfolgende Verbrauch (Masse- und/oder Volumenentnahme an Fluid) eine gewollte Entnahme darstellt.

In dem Zustand OPEN wird davon ausgegangen, dass der Verbraucher das in dem Rohrleitungssystem enthaltene Fluid, beispielsweise Wasser, nutzen (verbrauchen) möchte. Die Durchflussmesseinrichtung erfasst den Masse- und/oder Volumendurchfluss und gibt diesen an die Datenverarbeitungseinrichtung weiter. Die Datenverarbeitungseinrichtung summiert den gemessenen Masse- und/oder Volumendurchfluss ständig ab einem Zeitpunkt, an dem der gemessene Masse- und/oder Volumendurchfluss den ersten Minimaldurchflusswert überschreitet, d.h. als eine ernsthafte Entnahme anzusehen ist, und ermittelt hieraus die zu einem jeweiligen Zeitpunkt aktuelle Masse- und/oder Volumenentnahme, solange der Masse- und/oder Volumendurchfluss den zweiten Minimaldurchflusswert nicht unterschreitet. In dem Zustand OPEN wird eine vergleichsweise hohe aktuelle Masse- und/oder Volumenentnahme an Fluid erlaubt, weil davon ausgegangen wird, dass die Entnahme von Fluid gewollt ist, z.B. für die üblichen Vorgänge in einem Haushalt wie Toilettenspülung, Füllung einer Waschmaschine etc.. Erst wenn die aktuelle Masse- und/oder Volumenentnahme einen vorgebbaren ersten Entnahmegrenzwert überschreitet, welcher für Wasser beispielsweise bei 100 l liegen kann, geht die Datenverarbeitungseinrichtung davon aus, dass in dem Rohrleitungssystem eine Undichtigkeit besteht, beispielsweise ein Rohr geplatzt ist. In diesem Fall gibt die Datenverarbeitungseinrichtung eine entsprechende, vorgebbaren erste Warnmeldung aus, welche beispielsweise optisch und/oder akustisch erfolgt. Weiter können in diesem Fall durch die Datenverarbeitungseinrichtung Schutzmaßnahmen automatisiert initiiert werden. Beispielsweise kann das Rohrleitungssystem gegen das vorgelagerte, druckerhaltende System automatisch abgesperrt werden (z.B. mittels eines ansteuerbaren Absperrventils in der Zuführungsleitung), um einen weiteren Austritt von Fluid an der Undichtigkeitsstelle zu verhindern. Im Falle eines entzündlichen Fluids, insbesondere eines entzündlichen Gases, kann alternativ oder zusätzlich eine an das Rohrleitungssystem angeschlossene Gasanlage aktiviert werden, die durch Einleitung/Einspeisung eines nicht brennbaren Gases (z.B. Stickstoff, CO₂) in das Rohrleitungssystems eine Brand- oder Explosionsgefahr verringert.

Auch im Zustand SMARTLOCK ermittelt die Datenverarbeitungseinrichtung eine durch die Zuführungsleitung durchgeflossene Masse- und/oder Volumenentnahme des Fluids ab einem Zeitpunkt, an dem der gemessene Masse- und/oder Volumendurchfluss den ersten Minimaldurchflusswert überschreitet, und zwar so lange der Masse- und/oder Volumendurchfluss einen zweiten Minimaldurchflusswert nicht unterschreitet. Beim Überschreiten des ersten Minimaldurchflusswerts wird durch die Datenverarbeitungseinrichtung angenommen, dass nun eine - gewollte oder ungewollte - Entnahme stattfindet. Beim Unterschreiten des zweiten Minimaldurchflusswerts ist die Entnahme beendet. In diesem Fall wird angenommen, dass eine gewollte Entnahme stattgefunden hat. Die Datenverarbeitungseinrichtung summiert analog zum Zustand OPEN den gemessenen Masse- und/oder Volumendurchfluss ab dem Zeitpunkt, an dem der gemessene Masse- und/oder Volumendurchfluss den ersten Minimaldurchflusswert überschreitet, und ermittelt so zu jedem Zeitpunkt die durch die Zuführungsleitung durchgeflossene aktuelle Masse- und/oder Volumenentnahme des Fluids. Wenn diese aktuelle Masse- und/oder Volumenentnahme in dem Zustand SMARTLOCK zu groß ist, d.h. den zweiten Entnahmegrenzwert überschreitet, der beispielsweise für Wasser bei 10 l liegt, wird angenommen, dass es sich um eine ungewollte Entnahme handelt - d.h. eine Undichtigkeit detektiert wurde. In diesem Fall gibt die Datenverarbeitungseinrichtung eine zweite Warnmeldung aus, welche beispielsweise optisch und/oder akustisch erfolgt und auf eine ungewollte Entnahme, d.h. eine Undichtigkeit, hindeutet. Zusätzlich können weitere Schutzmaßnahmen automatisiert initiiert werden, beispielsweise die oben beschriebene Absperrung des Rohrleitungssystems gegen das vorgelagerte, druckerhaltende System und/oder die ebenfalls oben beschriebene Einleitung eines nicht brennbaren Gases. In dem Zustand SMARTLOCK liegt die erlaubte Masse- und/oder Volumenentnahme bei einem kleineren Wert als in dem Zustand OPEN. Dies wird dadurch realisiert, dass der zweite Entnahmegrenzwert kleiner ist als der erste Entnahmegrenzwert. Hierdurch können Undichtigkeiten in dem Rohrleitungssystem schneller gefunden werden. Der zweite Entnahmegrenzwert könnte für Wasser beispielsweise bei 10 l liegen.

Nachdem die Datenverarbeitungseinrichtung ein Überschreiten des ersten Minimaldurchflusswerts und somit eine Entnahme des Fluids festgestellt hat, kann der Nutzer durch eine bewusste Handlung des Nutzers, d.h. beispielsweise eine bestimmte, gewollte Entnahme des Fluids der erfindungsgemäßen Vorrichtung signalisieren, dass sich weitere gewollte Entnahmeereignisse anschließen werden. Erfindungsgemäß erfolgt entsprechend ein automatischer Übergang von dem Zustand SMARTLOCK in den Zustand OPEN dann, wenn der aktuell durch die Durchflussmesseinrichtung gemessene Masse- und/oder Volumendurchfluss den zweiten Minimaldurchflusswert unterschreitet und die aktuelle Masse- und/oder Volumenentnahme kleiner ist als der zweite Entnahmegrenzwert. Der Nutzer muss demnach gezielt eine Entnahme initiieren (d.h. den ersten Minimaldurchflusswert überschreiten) und auch wieder beenden (d.h. den zweiten Minimaldurchflusswert unterschreiten) und hierbei lediglich ein begrenztes Fluidvolumen entnehmen. Eine solche bewusste Handlung, die manuell oder auch maschinell (zum Beispiel durch eine erste Entnahme einer Waschmaschine oder einer Spülmaschine) realisiert werden kann, eröffnet für den Nutzer die Möglichkeit, nach dem Übergang in den Zustand OPEN größere Fluidmassen oder -volumina zu entnehmen. Folglich kann der Nutzer nach der vorliegenden Erfindung ohne zusätzlichen gerätetechnischen Aufwand, lediglich mittels einer bewussten Entnahme steuern, ob nachfolgende Entnahmen an Fluidmasse oder -volumen gewollt sind.

Das oben geschilderte Verhalten des Nutzers entspricht im Prinzip einer Datenübertragung über das Fluid (z.B. Wasser). Die bewusste Entnahme von Fluid umfassend das Überschreiten des ersten Minimaldurchflusswerts und das anschließende Unterschreiten des zweiten Minimaldurchflusswerts (ggf. auch innerhalb eines vorgegebenen Zeitabstands) kann der Übertragung des Signals "1" von dem Nutzer an die Datenverarbeitungseinrichtung entsprechen. Hierdurch wird im obigen Beispiel die Umschaltung des Zustands der erfindungsgemäßen Vorrichtung von SMARTLOCK auf OPEN bewirkt. Eine kontinuierliche Entnahme, d.h. ein aktuell durch die Durchflussmesseinrichtung gemessener Masse- und/oder Volumendurchflusswert oberhalb des ersten Minimaldurchflusswerts könnte der Übertragung des Signals "0" von dem Nutzer an die Datenverarbeitungseinrichtung entsprechen. Nach diesem Prinzip und unter Anwendung der Binärkodierung (z.B. mittels ASCII-Code) könnten weitere Schaltzustände der erfindungsgemäßen Vorrichtung realisiert werden. Hierfür werden die binären Signale durch gezielte Entnahme (z.B. bei Wasser - Entnahme aus dem Wasserhahn) über das Fluid an die Datenverarbeitungseinrichtung übertragen. Diese tastet in einer vorgegebenen Frequenz, deren reziproker Wert größer ist als die Ansprechzeit der Durchflussmesseinrichtung, das über das Fluid übertragene Signal ab. Folglich kann in einer Weiterbildung der Erfindung von dem Nutzer durch ein gezieltes Entnahmeverhalten eine Übertragung von Signalen "1" und "0" an die Datenverarbeitungseinrichtung (19) erfolgen, wobei die übertragenen Signale mittels der Datenverarbeitungseinrichtung (19) ausgewertet werden. Die Auswertung kann, wie oben beschrieben, beispielsweise eine bestimmte, vorgegebene Umschaltung in bestimmte Zustände der Vorrichtung (z.B. OPEN und SMARTLOCK) bewirken. Jeder Zustand ist durch eine Gruppe von Parametern (z.B. Minimaldurchflusswert, Entnahmegrenzwert, Warnmeldung und/oder Zeitabstand etc.) charakterisiert und kann zusätzlich durch einen bestimmten Fluidtyp (Brauchwasser, Regenwasser, Leitungswasser) als weiteren Parameter charakterisiert werden. Weitere Zustände mit anderen oder weiteren Parametern sind denkbar. Die Umschaltung von einem auf einen anderen Zustand erfolgt durch Änderung mindestens eines Parameters. Hierbei kann die Umschaltung zwischen verschiedenen Zuständen mit unterschiedlichen Fluidtypen mittels eines Dreiwege-Ventils erreicht werden.

In einem Ausführungsbeispiel kann der erste Minimaldurchflusswert gleich oder kleiner als der zweite Minimaldurchflusswert sein. Besonders bevorzugt sind, wie unten ausführlicher erläutert wird, der erste Minimaldurchflusswert und der zweite Minimaldurchflusswert gleich oder größer als der in einem Datenblatt der jeweiligen Durchflussmesseinrichtung für den jeweiligen Querschnitt der Zuführungsleitung festgelegte Anlaufwert.

In einem weiteren Ausführungsbeispiel kann das System automatisch nach einer längeren Zeit ohne bewusste Entnahme wieder in den Zustand SMARTLOCK zurückkehren. Erfindungsgemäß ist in diesem Ausführungsbeispiel die Datenverarbeitungseinrichtung derart eingerichtet, dass ein automatischer Übergang von dem Zustand OPEN zu dem Zustand SMARTLOCK dann erfolgt, wenn seit dem Unterschreiten des aktuell durch die Durchflussmesseinrichtung gemessenen Masse- und/oder Volumendurchflusses unter den zweiten Minimaldurchflusswert ohne Überschreiten des ersten Minimaldurchflusswerts (d.h. solange der erste Minimaldurchflusswert nicht überschritten wird) ein vorgebbarer zweiter Zeitabstand vergangen ist. Der zweite Zeitabstand kann beispielsweise 30 Minuten bis 60 Minuten betragen.

In einem weiteren Ausführungsbeispiel erfolgt in dem Zustand OPEN und/oder in dem Zustand SMARTLOCK eine Ausgabe einer vorgebbaren dritten Warnmeldung zusätzlich dann, wenn seit dem Zeitpunkt, an dem der Masse- und/oder Volumendurchfluss den ersten Minimaldurchflusswert überschreitet, ein vorgebbarer dritter Zeitabstand vergangen ist, und seit diesem Zeitpunkt der zweite Minimaldurchflusswert nicht unterschritten wurde. In diesem Ausführungsbeispiel wird davon ausgegangen, dass, wenn zu lange, d.h. bei Überschreiten eines dritten Zeitabstands (beispielsweise 20 Minuten), Fluid entnommen werden, es sich um eine ungewollte Entnahme, d.h. eine Undichtigkeit in dem Rohrleitungssystem handelt. Entsprechend wird eine dritte Warnmeldung ausgegeben. Auch die dritte Warnmeldung kann optisch und/oder akustisch erfolgen. Zusätzlich können auch in diesem Fall Schutzmaßnahmen automatisiert initiiert werden, beispielsweise die oben beschriebene Absperrung des Rohrleitungssystems gegen das vorgelagerte, druckerhaltende System und/oder die oben beschriebene Einleitung eines nicht brennbaren Gases. Der Grenzwert (dritter Zeitabstand) kann auch für die Zustände OPEN und SMARTLOCK unterschiedlich festgelegt werden, beispielsweise für Wasser für den Zustand SMARTLOCK mit 5 Minuten und für den Zustand OPEN mit 20 Minuten.

Selbstverständlich kann in einem weiteren Ausführungsbeispiel der Zustand OPEN manuell durch den Nutzer aktiviert werden. Daher weist die erfindungsgemäße Vorrichtung in diesem Ausführungsbeispiel eine vorzugsweise mit der Datenverarbeitungseinrichtung (drahtgebunden oder drahtlos) verbundene Betätigungseinrichtung auf, mittels der der Zustand OPEN durch einen Nutzer manuell aktivierbar und/oder eine Warnmeldung durch den Nutzer manuell bestätigbar ist. Bei der Aktivierung des Zustands OPEN erfolgt ein Übergang von einem beliebigen Zustand der erfindungsgemäßen Vorrichtung in den Zustand OPEN. Nach Bestätigung der Warnmeldung durch den Nutzer kehrt die erfindungsgemäße Vorrichtung in den Grundzustand SMARTLOCK oder OPEN zurück, abhängig davon, aus welchem Grundzustand die Warnmeldung erfolgte. Die Rückkehr erfolgt wieder in den gleichen Grundzustand. Die Datenverarbeitungseinrichtung geht bei einer Bestätigung einer Warnmeldung davon aus, dass der Nutzer über die Warnmeldung informiert ist.

In einem weiteren Ausführungsbeispiel ist die Datenverarbeitungseinrichtung mit Lernalgorithmus ausgestattet, sodass mindestens ein Parameter der Gruppe von Parametern umfassend den Zeitabstand der Messung des Masse- und/oder Volumendurchflusses durch die Durchflussmesseinrichtung, den ersten Minimaldurchflusswert, den zweiten Minimaldurchflusswert, die erste Warnmeldung, die zweite Warnmeldung, die dritte Warnmeldung, den ersten Entnahmegrenzwert, den zweiten Entnahmegrenzwert, den zweiten Zeitabstand und den dritten Zeitabstand anhand des detektierten Verhaltens des Rohrleitungssystems automatisch anpassbar ist. Durch den Lernalgorithmus kann die erfindungsgemäße Vorrichtung an die Bedürfnisse des oder die Nutzer adaptiert werden.

Die obige Aufgabenstellung wird ferner gelöst durch ein Verfahren mit den Merkmalen des Anspruchs 7.

Das erfindungsgemäße Verfahren weist insbesondere die folgenden Schritte auf und unterscheidet mindestens die Zustände SMARTLOCK and OPEN:
- Messung des Masse- und/oder Volumendurchflusses an Fluid durch die Zuführungsleitung kontinuierlich oder zumindest in vorgebbaren Zeitabständen,
- Ermittlung in jedem der Zustände SMARTLOCK und OPEN einer durch die Zuführungsleitung durchgeflossene Masse- und/oder Volumenentnahme des Fluids basierend auf den gemessenen Werten des Masse- und/oder Volumendurchflusses ab einem Zeitpunkt, an dem der Masse- und/oder Volumendurchfluss einen vorgebbaren ersten Minimaldurchflusswert überschreitet, und solange der gemessene Masse- und/oder Volumendurchfluss einen zweiten Minimaldurchflusswert nicht unterschreitet,
- Ausgabe einer vorgebbaren ersten Warnmeldung in dem Zustand OPEN, wenn die aktuelle Masse- und/oder Volumenentnahme einen vorgebbaren ersten Entnahmegrenzwert überschreitet,
- Ausgabe einer vorgebbaren zweiten Warnmeldung in dem Zustand SMARTLOCK, wenn die aktuelle Masse- und/oder Volumenentnahme einen vorgebbaren zweiten Entnahmegrenzwert überschreitet, wobei der zweite Entnahmegrenzwert kleiner ist als der erste Entnahmegrenzwert,
- automatischer Übergang von dem Zustand SMARTLOCK in den Zustand OPEN dann, wenn nach Überschreiten des ersten Minimaldurchflusswerts (MIN) anschließend der aktuell durch die Durchflussmesseinrichtung gemessene Masse- und/oder Volumendurchfluss den zweiten Minimaldurchflusswert unterschreitet und die aktuelle Masse- und/oder Volumenentnahme kleiner ist als der zweite Entnahmegrenzwert.

Das erfindungsgemäße Verfahren besitzt die oben im Zusammenhang mit der Vorrichtung beschriebenen Vorteile.

In einem Ausführungsbeispiel erfolgt ein automatischer Übergang von dem Zustand OPEN zu dem Zustand SMARTLOCK dann, wenn seit dem Unterschreiten des aktuell durch die Durchflussmesseinrichtung gemessenen Masse- und/oder Volumendurchflusses unter den zweiten Minimaldurchflusswert ohne Überschreiten des ersten Minimaldurchflusswerts ein vorgebbarer zweiter Zeitabstand vergangen ist.

In einem weiteren Ausführungsbeispiel erfolgt in dem Zustand OPEN und/oder in dem Zustand SMARTLOCK eine Ausgabe einer vorgebbaren dritten Warnmeldung zusätzlich dann, wenn seit dem Zeitpunkt, an dem der Masse- und/oder Volumendurchfluss den ersten Minimaldurchflusswert überschreitet und einen zweiten Minimaldurchflusswert nicht unterschreitet, ein vorgebbarer dritter Zeitabstand vergangen ist.

In einem weiteren Ausführungsbeispiel aktiviert ein Nutzer manuell den Übergang von dem Zustand SMARTLOCK in den Zustand OPEN und/oder bestätigt eine Warnmeldung.

In einem weiteren Ausführungsbeispiel wird mindestens ein Parameter der Gruppe von Parametern umfassend den Zeitabstand der Messung des Masse- und/oder Volumendurchflusses durch die Durchflussmesseinrichtung, den ersten Minimaldurchflusswert, den zweiten Minimaldurchflusswert, die erste Warnmeldung, die zweite Warnmeldung, die dritte Warnmeldung, den ersten Entnahmegrenzwert, den zweiten Entnahmegrenzwert, den zweiten Zeitabstand und den dritten Zeitabstand anhand des detektierten Verhaltens des Rohrleitungssystems automatisch, beispielsweise wie oben erläutert mittels Lernalgorithmus, angepasst.

Bei der erfindungsgemäßen Vorrichtung und dem erfindungsgemäßen Verfahren kann in einem Ausführungsbeispiel zusätzlich in dem Zustand SMARTLOCK beispielsweise zu einem vorgegebenen Zeitpunkt, in dem üblicherweise keine Entnahme erfolgt, mittels einer Druckmessung über einen vorgebbaren vierten Zeitraum, z.B. über einen Zeitraum von 1 Minute, vorzugsweise über einen Zeitraum von bis zu 30 Sekunden, besonders bevorzug über einen Zeitraum von 10 Sekunden bis 30 Sekunden, kontinuierlich oder in vorgebbaren Zeitabständen ermittelt werden, ob kleinste Undichtigkeiten im Rohrleitungssystem vorliegen. Eine solche Druckmessung kann prinzipiell an jedem Ort des Rohrleitungssystems und der Zuführungsleitung durchgeführt werden, wird aber vorzugsweise in unmittelbarer Nähe des Absperrventils in der Zuführungsleitung durchgeführt, so dass die Steuerung des Absperrventils und die des Druckmessers zusammen mit der Datenverarbeitungseinrichtung in einem Gehäuse untergebracht werden können. Die Druckmessung eignet sich insbesondere für Undichtigkeiten, bei denen der erste Minimaldurchflusswert nicht überschritten wird. Durch die Druckmessung kann auf einfache Weise ermittelt werden, ob kontinuierlich über kleinste Undichtigkeiten Fluid aus dem Rohrleitungssystem entweicht, da selbst bei kleinen Undichtigkeiten der Druck im Rohrleitungssystem merklich sinkt, und zwar ohne dass eine gewollte Entnahme erfolgt. Das Ergebnis der Druckmessung wird durch die Druckmesseinrichtung an die Datenverarbeitungseinrichtung übermittelt. Diese vergleicht die gemessenen Druckwerte mit einem Grenzdruckwert. Fällt der jeweilige gemessene Druckwert unter den Grenzdruckwert, so wird eine vierte Warnmeldung ausgegeben, welche beispielsweise optisch und/oder akustisch erfolgt und auf eine Undichtigkeit hindeutet. Zusätzlich können weitere Schutzmaßnahmen automatisiert initiiert werden, beispielsweise die oben beschriebene Absperrung des Rohrleitungssystems gegen das vorgelagerte, druckerhaltende System und/oder die oben beschriebene Einleitung eines nicht brennbaren Gases.

Das obige Problem löst auch eine Vorrichtung zur Datenverarbeitung, welche Mittel zur Ausführung des oben beschriebenen Verfahrens umfasst, bzw. ein computerlesbares Speichermedium umfassend Befehle, die bei der Ausführung des Programms durch einen Computer diesen veranlassen, das oben erläuterte Verfahren auszuführen. Auch die erfindungsgemäße Vorrichtung zur Datenverarbeitung bzw. das erfindungsgemäße computerlesbare Speichermedium wie CD-ROM, Datenstick und dergleichen weisen die oben im Zusammenhang mit der erfindungsgemäßen Vorrichtung erläuterten Vorteile auf.

Das Problem wird auch durch ein Computerprogrammprodukt mit den Merkmalen des Anspruchs 14 gelöst, insbesondere umfassend Befehle, die bei der Ausführung des Programms durch einen Computer diesen veranlassen, das folgende Verfahren auszuführen, wobei mindestens ein Zustand SMARTLOCK und ein Zustand OPEN unterschieden wird und wobei im Ausgangszustand ein Zustand SMARTLOCK eingenommen wird:
- Empfangen gemessener Werte des Masse- und/oder Volumendurchflusses eines Fluids durch eine Zuführungsleitung für ein sich daran anschließendes Rohleitungssystem,
- Ermittlung in jedem der Zustände SMARTLOCK und OPEN einer durchgeflossenen Masse- und/oder Volumenentnahme des Fluids basierend auf den gemessenen Werten des Masse- und/oder Volumendurchflusses ab einem Zeitpunkt, an dem der Masse- und/oder Volumendurchfluss einen vorgebbaren ersten Minimaldurchflusswert überschreitet, und solange der gemessene Masse- und/oder Volumendurchfluss einen zweiten Minimaldurchflusswert nicht unterschreitet,
- Ausgabe einer vorgebbaren ersten Warnmeldung in dem Zustand OPEN, wenn die aktuelle Masse- und/oder Volumenentnahme einen vorgebbaren ersten Entnahmegrenzwert überschreitet,
- Ausgabe einer vorgebbaren zweiten Warnmeldung in dem Zustand SMARTLOCK, wenn die aktuelle Masse- und/oder Volumenentnahme einen vorgebbaren zweiten Entnahmegrenzwert überschreitet, wobei der zweite Entnahmegrenzwert kleiner ist als der erste Entnahmegrenzwert,
- automatischer Übergang von dem Zustand SMARTLOCK in den Zustand OPEN dann, wenn nach Überschreiten des ersten Minimaldurchflusswerts (MIN) anschließend der aktuell durch die Durchflussmesseinrichtung gemessene Masse- und/oder Volumendurchfluss den zweiten Minimaldurchflusswert unterschreitet und die aktuelle Masse- und/oder Volumenentnahme kleiner ist als der zweite Entnahmegrenzwert.

Auch das erfindungsgemäße Computerprogrammprodukt besitzt die oben im Zusammenhang mit der erfindungsgemäßen Vorrichtung genannten Vorteile.

Alle oben genannten Parameter der erfindungsgemäßen Vorrichtung, des erfindungsgemäßen Verfahrens, der erfindungsgemäßen DatenverarbeitungsVorrichtung und des erfindungsgemäßen Computerprogrammprodukts, umfassend beispielsweise den Zeitabstand, in dem der Masse- und/oder Volumendurchfluss an Fluid durch die Zuführungsleitung gemessen wird, den ersten Minimaldurchflusswert, den zweiten Minimaldurchflusswert, die erste Warnmeldung, den ersten Entnahmegrenzwert, die zweite Warnmeldung, den zweiten Entnahmegrenzwert, den zweiten Zeitabstand, die dritte Warnmeldung, die vierte Warnmeldung, den Grenzdruckwert und/oder den dritten Zeitabstand können vorab durch den Nutzer (z.B. bei einer Initialisierung) und/oder automatisch, z.B. mittels des oben beschriebenen Lernalgorithmus, durch die Datenverarbeitungseinrichtung festgelegt und/oder während der Nutzung an die jeweiligen Anforderungen angepasst/verändert werden.

Es ist insbesondere erforderlich, die verwendete Durchflussmesseinrichtung, den Querschnitt der Zuführungsleitung und die Parameter erster Minimaldurchflusswert und zweiter Minimaldurchflusswert aufeinander abzustimmen. Zu jeder Durchflussmesseinrichtung existiert ein Datenblatt, welches für den jeweiligen Querschnitt einer Leitung, in der die Durchflussmesseinrichtung angewendet werden soll - hier die Zuführungsleitung - angibt, welches der jeweilige Anlaufwert ist. Der erste Minimaldurchflusswert und der zweite Minimaldurchflusswert darf nicht unter dem jeweiligen Anlaufwert der Durchflussmesseinrichtung für den entsprechenden Querschnitt der Zuführungsleitung liegen, sondern muss größer oder gleich diesem Anlaufwert sein.

Weiter soll an dieser Stelle darauf hingewiesen werden, dass der gemessene Durchflusswert, ob ein Massendurchflusswert oder der Volumendurchflusswert an Fluid gemessen wird, von der verwendeten Durchflussmesseinrichtung abhängt. Bei einem gemessenen Volumendurchflusswert kann dieser in einen Massendurchflusswert des jeweiligen Fluids basierend auf dem jeweiligen Dichtewert des Fluids bei der entsprechenden Temperatur und dem entsprechenden Druck, umgerechnet werden. Entsprechend kann aus den gemessenen Durchflusswerten die jeweilige Entnahme an Fluidvolumen oder Fluidmasse ermittelt werden.

Die Erfindung wird nachfolgend anhand von Ausführungsbeispielen näher erläutert, welche in den Figuren dargestellt sind. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: ein Ausführungsbeispiel einer erfindungsgemäßen Vorrichtung zur Erkennung einer Undichtigkeit in einem Wasser-Rohrleitungssystem,
- Fig. 2: ein erstes Volumendurchfluss-Zeit-Diagramm, das das erfindungsgemäße Verfahren beschreibt und
- Fig. 3: ein zweites Volumendurchfluss-Zeit-Diagramm, das ebenfalls das erfindungsgemäße Verfahren erläutert.

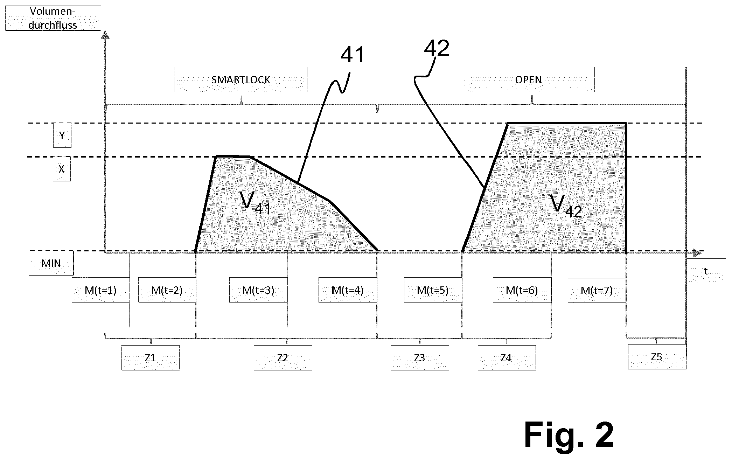

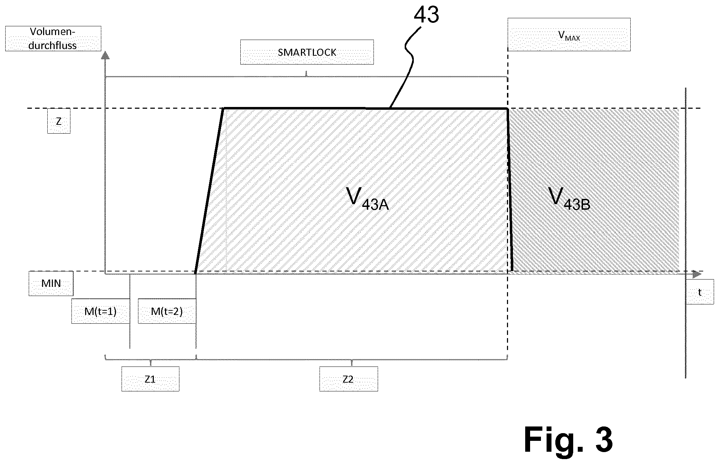

Die in den Fig. 2 und 3 dargestellten Diagramme beschreiben den Messverlauf idealisiert. Insbesondere sind die wirklichen Zeitabstände der Messung deutlich kleiner als in den Diagrammen angegeben. Die in den Diagrammen gezeigten Zeitabstände sind deshalb so groß gewählt, um die Lesbarkeit der Diagramme zu gewährleisten.

Die Erfindung wird im Folgenden anhand des Fluids Wasser erläutert. Dies ist jedoch nur ein Ausführungsbeispiel. Die Erfindung arbeitet mit den anderen, oben genannten Fluiden in gleicher Weise und soll sich daher ebenfalls auf diese anderen Fluide beziehen.

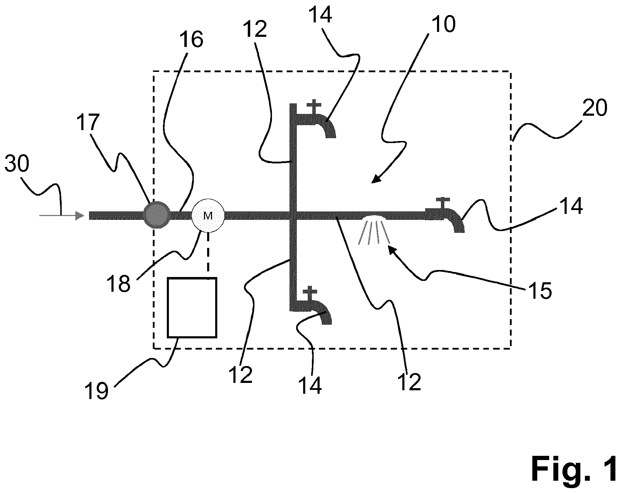

Die in Fig. 1 gezeigte erfindungsgemäße Vorrichtung zeigt ein Rohrleitungssystem 10 mit einer Vielzahl von miteinander verbundenen Rohren 12, welche als Fluid Wasser zur Wasserversorgung einer Einheit führen, die beispielsweise eine Gebäudeeinheit (z.B. eine Wohnung, eine Doppelhaushälfte, ein Haus oder mehrere Häuser) oder eine industrielle Einheit darstellen kann. Im vorliegenden Ausführungsbeispiel wird angenommen, dass die mit gestrichelter Linie dargestellte Einheit ein Einfamilienhaus 20 ist. An den Enden der Rohre sind Entnahmestellen 14, beispielsweise ein Wasserhahn, ein Toilettenspülungsanschluss oder ein Waschmaschinen- oder Spülmaschinenanschluss, vorgesehen. Das Rohrleitungssystem 10 kann eine Leckage/Undichtigkeit 15 aufweisen und hierdurch Wasser ungewollt verlieren. Durch die Undichtigkeit 15 können erhebliche Schäden an dem Einfamilienhaus 20 entstehen, die von den Bewohnern (Nutzern) des Einfamilienhauses 20 bei einer kleinen Undichtigkeit erst nach einem längeren Zeitraum entdeckt wird. Daher sind diese daran interessiert, eine Undichtigkeit 15 bereits zu einem frühen Zeitpunkt zu erkennen, sodass diese beseitigt werden kann. Eine Undichtigkeit 15 soll zudem sicher detektiert werden.

Das Rohrleitungssystem 10 ist über eine einzige Zuführungsleitung 16 mit dem vorgelagerten Wassernetz 30 verbunden. Gegebenenfalls kann das Rohrleitungssystem mittels eines Hauptventils 17 in der Zuführungsleitung 16 gegen das vorgelagerte Wassernetz 30 abgeschlossen werden. In der einzigen Zuführungsleitung 16 ist zudem eine Durchflussmesseinrichtung 18 angeordnet, welche kontinuierlich oder zumindest in vorgebbaren Zeitabständen, beispielsweise alle 0,05 bis 1,5 Sekunden, den Volumendurchfluss an Wasser durch die Zuführungsleitung 16 misst. Alternativ könnte auch der Massendurchfluss an Wasser gemessen werden oder bei Kenntnis der Dichte des jeweiligen Fluids der gemessene Massendurchfluss in einen Volumendurchfluss umgerechnet werden und umgekehrt. Die unten geschilderten Ausführungsbeispiele beziehen sich lediglich auf den Volumendurchfluss und die Volumenentnahme an Fluid. Das Vorgehen ist analog, wenn es auf den Massendurchfluss und die Masseentnahme bezogen wird.

Weiter ist eine Datenverarbeitungseinrichtung 19 vorgesehen, beispielsweise ein Computer, Laptop, Smartphone oder dergleichen Hardware, welche dazu eingerichtet ist, die durch die Durchflussmesseinrichtung 18 gemessenen Volumendurchfluss-Werte zu empfangen und weiterzuverarbeiten. Die Übertragung der durch die Durchflussmesseinrichtung 18 gemessenen Volumendurchfluss-Werte zu der Datenverarbeitungseinrichtung 19 kann kabelgebunden, beispielsweise über eine Schnittstelle und eine Verbindungsleitung, oder kabellos, z.B. über Bluetooth, WLAN, ZigBee, NFC, Wibree oder WiMAX im Radiofrequenzbereich sowie IrDA und optischen Richtfunk (FSO) im infraroten bzw. optischen Frequenzbereich, erfolgen. Entsprechend weist die Datenverarbeitungseinrichtung 19 in diesem Fall beispielsweise einen Empfänger für die von der Durchflussmesseinrichtung 18 ausgesandten elektromagnetischen Signale auf.

Die erfindungsgemäße Vorrichtung bzw. das erfindungsgemäße Verfahren unterscheidet mindestens zwei Zustände, nämlich den Zustand SMARTLOCK und den Zustand OPEN. Diese Zustände sind in den Figuren 2 und 3 mittels einer parallel zur x-Achse verlaufenden Linie/Klammer gekennzeichnet. In dem Zustand SMARTLOCK soll keine Entnahme von Wasser erfolgen, sodass für diesen Zustand bereits eine vergleichsweise kleine Volumenentnahme (Volumenentnahme > zweiter Entnahmegrenzwert, z.B. 10 l) dazu führt, dass die Datenverarbeitungseinrichtung 19 eine Warnmeldung ausgibt. Demgegenüber ist in dem Zustand OPEN eine Wasserentnahme mit einer höheren Volumenentnahme erlaubt, da in diesem Zustand mit einer Wasserentnahme gerechnet wird.

In den Ausführungsbeispielen gemäß der Fig. 2 und 3 sind der erste Minimaldurchflusswert und der zweite Minimaldurchflusswert gleich und auf der y-Achse mit MIN bezeichnet. Der erste Minimaldurchflusswert und der zweite Minimaldurchflusswert entsprechen dem jeweiligen Anlaufwert der Durchflussmesseinrichtung, beispielsweise für den vollelektronischen Kompaktwasserzähler mit Flügelradabtastung Corona E der Fa. Diehl für eine Nennweite der Zuführungsleitung von 15 mm ein Wert von 4 l/h und für eine Nennweite von 20 mm ein Wert von 6 l/h oder den Ultraschallzähler Hydrus der Fa. Diehl für eine Nennweite von 15 mm ein Wert von 1,3 l/h (Beispiel für das Fluid Gas: mikrothermischer Gaszähler Aerius der Fa. Diehl für eine Nennweite von 25 mm ein Wert von 0,009 m³/h, l/h bedeutet Liter/Stunde, m³/h bedeutet Kubikmeter/Stunde).

Das System startet, wie in Fig. 2 gezeigt, in dem Zustand SMARTLOCK. In dem Zeitraum Z1 erfolgt keine Wasserentnahme. Die Durchflussmesseinrichtung 18 misst in festen Abständen, beispielsweise jede Sekunde, den Volumendurchfluss von Wasser in der Zuführungsleitung 16. Die Messzeitpunkte sind in den Fig. 2 und 3 mit M(t=1), M(t=2) usw. an der x-Achse (Zeit-Achse) gekennzeichnet. Zu dem Zeitpunkt t = 2 beginnt ein Bewohner des Einfamilienhauses 20 mit der Wasserentnahme, beispielsweise durch Aufdrehen eines Wasserhahns an einer Entnahmestelle 14. Zu dem Zeitpunkt t = 2 überschreitet der gemessene Volumendurchfluss einen ersten Minimaldurchflusswert MIN und steigt danach schnell an (siehe erste Verbrauchskurve 41 in Fig. 2). Ab dem Zeitpunkt t = 2 summiert die Datenverarbeitungseinrichtung 19 die empfangenen Volumendurchfluss-Messwerte und ermittelt zwischen den Zeitpunkten t = 2 und t = 4, d.h. in dem Zeitraum Z2, die jeweils aktuelle Volumenentnahme. Die aktuelle Volumenentnahme ist der Flächeninhalt V₄₁ in dem in Fig. 2 gezeigten Diagramm unterhalb der ersten Verbrauchskurve 41 bis zu dem jeweiligen Zeitpunkt t. Der Volumendurchfluss der ersten Verbrauchskurve 41 erreicht maximal den Wert X und fällt danach bis t = 4 wieder ab, bis er einen zweiten Minimaldurchflusswert MIN unterschreitet. Die Datenverarbeitungseinrichtung 19 geht folglich davon aus, dass die Entnahme zum Zeitpunkt t = 4 beendet ist. Da bei einer Undichtigkeit in der Regel ständig Wasser aus dem Rohrleitungssystem in die Umgebung gelangt, ist es bei einer wieder beendeten Entnahme, die noch dazu unterhalb eines zweiten Entnahmegrenzwerts liegt, sehr unwahrscheinlich, dass es sich um eine ungewollte Entnahme handelt. Daher wird die durch die erste Verbrauchskurve gekennzeichnet Entnahme als gewollte Entnahme eingestuft.

Durch die offensichtlich gewollte Entnahme (erste Verbrauchskurve 41) schaltet die Datenverarbeitungsvorrichtung automatisch in den Zustand OPEN. In diesem Zustand wird mit einer weiteren Wasserentnahme gerechnet, die auch vom Volumen größer sein kann. Daher werden alle Verbräuche, die unterhalb eines ersten Entnahmegrenzwerts liegen, als unkritisch hinsichtlich einer Undichtigkeit bewertet.

Bei einer anderen Betrachtung des oben geschilderten Vorgehens hat der Bewohner (Nutzer) durch die Entnahme am Wasserhahn, d.h. das Aufdrehen des Wasserhahns und das anschließende Zudrehen, ein Signal erzeugt (z.B. das Signal "1") und über das Wasser aufgrund der gemessenen Entnahme an die Datenverarbeitungseinrichtung 19 übertragen. Aufgrund dieses Signals schaltet die Datenverarbeitungseinrichtung 19 von dem Zustand SMARTLOCK in den Zustand OPEN. Entsprechend wird in einem für den vorliegenden Zustand der erfindungsgemäßen Vorrichtung eingerichteten Speicherabschnitt der Wert "0" (für den Zustand SMARTLOCK") in den Zustand "1" (für OPEN) geändert.

In dem Zeitpunkt t = 5 wird an einer weiteren Entnahmestelle 14 wieder Wasser aus dem Rohrleitungssystem 10 entnommen, beispielsweise für eine Toilettenspülung. Zum Zeitpunkt t = 5 überschreitet der Volumendurchfluss den ersten Minimaldurchflusswert MIN und die Datenverarbeitungseinrichtung 19 summiert die gemessenen Volumenentnahme-Werte über die Zeit t und erhält zu jedem Zeitpunkt einen Wert für die aktuelle Volumenentnahme ab dem Zeitpunkt t = 5, welche dem Flächeninhalt V₄₂ unter der in Fig. 2 dargestellten zweiten Verbrauchskurve 42 bis zu dem jeweiligen Zeitpunkt t entspricht. Der durch die Durchflussmesseinrichtung 18 gemessene Volumendurchfluss erreicht für die zweite Entnahme (siehe zweiten Verbrauchskurve 42 maximal einen Wert Y und fällt zum Zeitpunkt t = 7 unter den zweiten Minimaldurchflusswert MIN ab. Da bei beiden Entnahmen (Verbrauchskurven 41 und 42) der zugeordnete erste Entnahmegrenzwert für den Zustand OPEN bzw. der zugeordnete zweite Entnahmegrenzwert für den Zustand SMARTLOCK jeweils nicht erreicht wurde, wird für beide Entnahmen auch keine Warnmeldung ausgegeben.

Dem gegenüber überschreitet die in Fig. 3 gezeigte Entnahme (Volumenentnahme V_{43A}, siehe dritte Verbrauchskurve 43), die analog zu der ersten Verbrauchskurve 41 zum Zeitpunkt t=2 beginnt, nach einem Zeitraum Z2 einen für den Zustand SMARTLOCK vorgegebenen zweiten Entnahmegrenzwert V_{MAX} (V_{43A} > V_{MAX}). Nach dem Zeitpunkt t=2 steigt der Volumendurchfluss über den Minimaldurchflusswert MIN bis auf einen Volumendurchflusswert Z. Der Volumendurchfluss bleibt über den Zeitraum Z2 auf diesem Volumendurchflusswert Z bis der zweiten Entnahmegrenzwert V_{MAX} (V_{43A} > V_{MAX}) erreicht wird. Zu diesem Zeitpunkt erfolgt durch die Datenverarbeitungseinrichtung die Ausgabe einer Warnmeldung, die den Nutzer darauf hinweist, dass in dem Rohrleitungssystem 10 vermutlich eine Undichtigkeit aufgetreten ist. Die Warnmeldung kann akustisch und/oder optisch erfolgen. Zu diesem Zeitpunkt wird auch sicherheitshalber durch ein entsprechendes Signal der Datenverarbeitungseinrichtung 19 das Absperrventil 17, das mit der Datenverarbeitungseinrichtung 19 verbunden ist, automatisch geschlossen, so dass die in Fig. 3 gezeigte Volumenentnahme V_{43B} an Wasser nicht mehr erfolgen kann. Diese würde erhebliche Schäden an dem Einfamilienhaus 20 erzeugen.

### Bezugszeichenliste

- 10: Rohrleitungssystem
- 12: Rohr
- 14: Entnahmestelle
- 15: Undichtigkeit
- 16: Zuführungsleitung
- 17: Absperrventil
- 18: Durchflussmesseinrichtung
- 19: Datenverarbeitungseinrichtung
- 20: Einfamilienhaus
- 30: vorgelagertes Wassernetz
- 41: erste Verbrauchskurve, Volumendurchfluss an Wasser in Abhängigkeit von der Zeit t
- 42: zweite Verbrauchskurve, Volumendurchfluss an Wasser in Abhängigkeit von der Zeit t
- 43: dritte Verbrauchskurve, Volumendurchfluss an Wasser in Abhängigkeit von der Zeit t

- MIN: erster und zweiter Minimaldurchflusswert
- V₄₁, V₄₂, V_{43A}, V_{43B}: Volumenentnahme
- V_{MAX}: zweiter Entnahmegrenzwert
- X, Y, Z: Volumendurchfluss-Wert
- Z1, Z2, Z3, Z4, Z5: Zeitraum

## Patentansprüche

1. Vorrichtung zur Erkennung einer Undichtigkeit in einem Rohrleitungssystem (10) für ein Fluid, wobei das Fluid dem Rohrleitungssystem (10) mittels einer Zuführungsleitung (16) von einem vorgelagerten druckerhaltenden System zugeführt wird, wobei in dem Rohrleitungssystem (10) mindestens eine Entnahmestelle (14) für das Fluid vorgesehen ist, aufweisend
- eine Durchflussmesseinrichtung (18), welche in der Zuführungsleitung (16) angeordnet ist, und
- eine Datenverarbeitungseinrichtung (19), welche mit der Durchflussmesseinrichtung (18) verbunden ist,
wobei die Durchflussmesseinrichtung (18) kontinuierlich oder zumindest in vorgebbaren Zeitabständen den Masse- und/oder Volumendurchfluss an Fluid durch die Zuführungsleitung (16) misst und die gemessenen Werte des Masse- und/oder Volumendurchflusses an die Datenverarbeitungseinrichtung (19) übermittelt,
**dadurch gekennzeichnet, dass** die Datenverarbeitungseinrichtung (19) derart eingerichtet ist, dass mindestens ein Überwachungs-Zustand SMARTLOCK und ein Überwachungs-Zustand OPEN unterschieden wird und dass in jedem der Zustände SMARTLOCK und OPEN eine durch die Zuführungsleitung (16) durchgeflossene, aktuelle Masse- und/oder Volumenentnahme (V₄₁, V₄₂, V_{43A}) des Fluids basierend auf den gemessenen Werten des Masse- und/oder Volumendurchflusses ermittelbar ist ab einem Zeitpunkt, an dem der gemessene Masse- und/oder Volumendurchfluss einen vorgebbaren ersten Minimaldurchflusswert (MIN) überschreitet, und solange der gemessene Masse- und/oder Volumendurchfluss einen vorgebaren zweiten Minimaldurchflusswert (MIN) nicht unterschreitet,
wobei die Datenverarbeitungseinrichtung (19) weiter derart eingerichtet ist, dass
• in dem Zustand OPEN durch die Datenverarbeitungseinrichtung (19) eine Ausgabe einer vorgebbaren ersten Warnmeldung erfolgt, wenn die aktuelle Masse- und/oder Volumenentnahme (V₄₂) einen vorgebbaren ersten Entnahmegrenzwert überschreitet,
• in dem Zustand SMARTLOCK durch die Datenverarbeitungseinrichtung (19) eine Ausgabe einer vorgebbaren zweiten Warnmeldung erfolgt, wenn die aktuelle Masse- und/oder Volumenentnahme (V₄₁, V_{43A}) einen vorgebbaren zweiten Entnahmegrenzwert (V_{MAX}) überschreitet, wobei der zweite Entnahmegrenzwert (V_{MAX}) kleiner als der erste Entnahmegrenzwert ist,
• ein automatischer Übergang von dem Zustand SMARTLOCK in den Zustand OPEN dann erfolgt, wenn der aktuell durch die Durchflussmesseinrichtung (18) gemessene Masse- und/oder Volumendurchfluss nach Überschreiten des ersten Minimaldurchflusswerts (MIN) anschließend den zweiten Minimaldurchflusswert (MIN) unterschreitet und die aktuelle Masse- und/oder Volumenentnahme (V₄₁) kleiner ist als der zweite Entnahmegrenzwert (V_{MAX}), wobei beim Start der Vorrichtung der Zustand SMARTLOCK eingenommen wird.

2. Vorrichtung nach Anspruch 1, **dadurch gekennzeichnet, dass** die Datenverarbeitungseinrichtung (19) derart eingerichtet ist, dass ein automatischer Übergang von dem Zustand OPEN zu dem Zustand SMARTLOCK dann erfolgt, wenn seit dem Unterschreiten des aktuell durch die Durchflussmesseinrichtung (18) gemessenen Masse- und/oder Volumendurchflusses unter den zweiten Minimaldurchflusswert (MIN) ohne Überschreiten des ersten Minimaldurchflusswerts ein vorgebbarer zweiter Zeitabstand vergangen ist.

3. Vorrichtung nach einem der vorhergehenden Ansprüche, **dadurch gekennzeichnet, dass** in dem Zustand OPEN und/oder in dem Zustand SMARTLOCK eine Ausgabe einer vorgebbaren dritten Warnmeldung zusätzlich dann erfolgt, wenn seit dem Zeitpunkt, an dem der Masse- und/oder Volumendurchfluss den ersten Minimaldurchflusswert (MIN) überschreitet, ein vorgebbarer dritter Zeitabstand vergangen ist, und wenn seit diesem Zeitpunkt der zweite Minimaldurchflusswert (MIN) nicht unterschritten wurde.

4. Vorrichtung nach einem der vorhergehenden Ansprüche, **gekennzeichnet durch** eine Betätigungseinrichtung, mittels der der Zustand OPEN durch einen Nutzer manuell aktivierbar und/oder eine Warnmeldung durch den Nutzer manuell bestätigbar ist.

5. Vorrichtung nach einem der vorhergehenden Ansprüche, **dadurch gekennzeichnet, dass** die Datenverarbeitungseinrichtung (19) mit Lernalgorithmus ausgestattet ist, sodass mindestens ein Parameter der Gruppe von Parametern umfassend den Zeitabstand der Messung des Masse- und/oder Volumendurchflusses durch die Durchflussmesseinrichtung, den ersten Minimaldurchflusswert (MIN), den zweiten Minimaldurchflusswert (MIN), die erste Warnmeldung, die zweite Warnmeldung, die dritte Warnmeldung, den ersten Entnahmegrenzwert, den zweiten Entnahmegrenzwert (V_{MAX}), den zweiten Zeitabstand und den dritten Zeitabstand anhand des detektierten Verhaltens des Rohrleitungssystems (10) automatisch anpassbar ist.

6. Vorrichtung nach einem der vorhergehenden Ansprüche, **dadurch gekennzeichnet, dass** von dem Nutzer durch ein gezieltes Entnahmeverhalten Signale "1" und "0" an die Datenverarbeitungseinrichtung (19) übertragbar sind, wobei die übertragenen Signale mittels der Datenverarbeitungseinrichtung (19) ausgewertet werden.

7. Verfahren zur Erkennung einer Undichtigkeit in einem Rohrleitungssystem (10) für ein Fluid, wobei das Fluid dem Rohrleitungssystem (10) mittels einer Zuführungsleitung von einem vorgelagerten druckerhaltenden System zugeführt wird, wobei in dem Rohrleitungssystem (10) mindestens eine Entnahmestelle (14) für das Fluid vorgesehen ist,
**dadurch gekennzeichnet, dass** mindestens ein Überwachungs-Zustand SMARTLOCK und ein Überwachungs-Zustand OPEN unterschieden wird, aufweisend die folgenden Schritte:
• Messung des Masse- und/oder Volumendurchflusses an Fluid durch die Zuführungsleitung (16) kontinuierlich oder zumindest in vorgebbaren Zeitabständen,
• Ermittlung in jedem der Zustände SMARTLOCK und OPEN einer durch die Zuführungsleitung (16) durchgeflossene Masse- und/oder Volumenentnahme (V₄₁, V₄₂, V_{43A}) des Fluids basierend auf den gemessenen Werten des Masse- und/oder Volumendurchflusses ab einem Zeitpunkt, an dem der gemessene Masse- und/oder Volumendurchfluss einen vorgebbaren ersten Minimaldurchflusswert (MIN) überschreitet, und solange der gemessene Masse- und/oder Volumendurchfluss einen zweiten Minimaldurchflusswert (MIN) nicht unterschreitet,
• Ausgabe einer vorgebbaren ersten Warnmeldung in dem Zustand OPEN, wenn die aktuelle Masse- und/oder Volumenentnahme (V₄₂) einen vorgebbaren ersten Entnahmegrenzwert überschreitet,
• Ausgabe einer vorgebbaren zweiten Warnmeldung in dem Zustand SMARTLOCK, wenn die aktuelle Masse- und/oder Volumenentnahme (V₄₁, V_{43A}) einen vorgebbaren zweiten Entnahmegrenzwert (V_{MAX}) überschreitet, wobei der zweite Entnahmegrenzwert (V_{MAX}) kleiner als der erste Entnahmegrenzwert ist,
• automatischer Übergang von dem Zustand SMARTLOCK in den Zustand OPEN dann, wenn nach Überschreiten des ersten Minimaldurchflusswerts (MIN) anschließend der aktuell durch die Durchflussmesseinrichtung (18) gemessene Masse- und/oder Volumendurchfluss den zweiten Minimaldurchflusswert (MIN) unterschreitet und die aktuelle Masse- und/oder Volumenentnahme (V₄₁) kleiner ist als der zweite Entnahmegrenzwert (V_{MAX}), wobei das Verfahren im Zustand SMARTLOCK gestartet wird.

8. Verfahren nach Anspruch 7, **dadurch gekennzeichnet, dass** ein automatischer Übergang von dem Zustand OPEN zu dem Zustand SMARTLOCK dann erfolgt, wenn seit dem Unterschreiten des aktuell durch die Durchflussmesseinrichtung (18) gemessenen Masse- und/oder Volumendurchflusses unter den zweiten Minimaldurchflusswert ohne Überschreiten des ersten Minimaldurchflusswerts ein vorgebbarer zweiter Zeitabstand vergangen ist.

9. Verfahren nach einem der Ansprüche 7 bis 8, **dadurch gekennzeichnet, dass** in dem Zustand OPEN und/oder in dem Zustand SMARTLOCK eine Ausgabe einer vorgebbaren dritten Warnmeldung zusätzlich dann erfolgt, wenn seit dem Zeitpunkt, an dem der Masse- und/oder Volumendurchfluss den ersten Minimaldurchflusswert (MIN) überschreitet, ein vorgebbarer dritter Zeitabstand vergangen ist, und wenn seit diesem Zeitpunkt der zweite Minimaldurchflusswert (MIN) nicht unterschritten wurde.

10. Verfahren nach einem der Ansprüche 7 bis 9, **dadurch gekennzeichnet, dass** ein Nutzer manuell den Übergang von dem Zustand SMARTLOCK in den Zustand OPEN aktiviert und/oder eine Warnmeldung bestätigt.

11. Verfahren nach einem der Ansprüche 7 bis 10, **dadurch gekennzeichnet, dass** mindestens ein Parameter der Gruppe von Parametern umfassend den Zeitabstand der Messung des Masse- und/oder Volumendurchflusses durch die Durchflussmesseinrichtung, den ersten Minimaldurchflusswert (MIN), den zweiten Minimaldurchflusswert (MIN), die erste Warnmeldung, die zweite Warnmeldung, die dritte Warnmeldung, den ersten Entnahmegrenzwert, den zweiten Entnahmegrenzwert (V_{MAX}), den zweiten Zeitabstand und den dritten Zeitabstand anhand des detektierten Verhaltens des Rohrleitungssystems (10) automatisch angepasst wird.

12. Verfahren nach einem der Ansprüche 7 bis 11, **dadurch gekennzeichnet, dass** von dem Nutzer durch ein gezieltes Entnahmeverhalten eine Übertragung von Signalen "1" und "0" an die Datenverarbeitungseinrichtung (19) erfolgt, wobei die übertragenen Signale mittels der Datenverarbeitungseinrichtung (19) ausgewertet werden.

13. Computerprogrammprodukt, umfassend Befehle, die bei der Ausführung des Programms durch einen Computer diesen veranlassen, das folgende Verfahren auszuführen,
**dadurch gekennzeichnet, dass** mindestens ein Zustand Überwachungs-SMARTLOCK und ein Überwachungs-Zustand OPEN unterschieden wird und wobei im Ausgangszustand ein Zustand SMARTLOCK eingenommen wird:
• Empfangen gemessener Werte des Masse- und/oder Volumendurchflusses eines Fluids durch eine Zuführungsleitung (16) für ein sich daran anschließendes Rohleitungssystem (10),
• Ermittlung in jedem der Zustände SMARTLOCK und OPEN einer durchgeflossenen Masse- und/oder Volumenentnahme (V₄₁, V₄₂, V_{43A}) des Fluids basierend auf den gemessenen Werten des Masse- und/oder Volumendurchflusses ab einem Zeitpunkt, an dem der gemessene Masse- und/oder Volumendurchfluss einen vorgebbaren ersten Minimaldurchflusswert (MIN) überschreitet, und solange der gemessene Masse- und/oder Volumendurchfluss einen zweiten Minimaldurchflusswert (MIN) nicht unterschreitet,
• Ausgabe einer vorgebbaren ersten Warnmeldung in dem Zustand OPEN, wenn die aktuelle Masse- und/oder Volumenentnahme (V₄₂) einen vorgebbaren ersten Entnahmegrenzwert überschreitet,
• Ausgabe einer vorgebbaren zweiten Warnmeldung in dem Zustand SMARTLOCK, wenn die aktuelle Masse- und/oder Volumenentnahme (V₄₁, V_{43A}) einen vorgebbaren zweiten Entnahmegrenzwert (V_{MAX}) überschreitet, wobei der zweite Entnahmegrenzwert (V_{MAX}) kleiner ist als der erste Entnahmegrenzwert,
• automatischer Übergang von dem Zustand SMARTLOCK in den Zustand OPEN dann, wenn nach Überschreiten des ersten Minimaldurchflusswerts (MIN) anschließend der aktuell durch die Durchflussmesseinrichtung (18) gemessene Masse- und/oder Volumendurchfluss den zweiten Minimaldurchflusswert (MIN) unterschreitet und die aktuelle Masse- und/oder Volumenentnahme kleiner ist als der zweite Entnahmegrenzwert (V_{MAX}).

14. Computerlesbares Speichermedium umfassend Befehle, die bei der Ausführung des Programms durch einen Computer diesen veranlassen, das Verfahren nach einem der Ansprüche 7 bis 12 auszuführen.

## Claims

1. Device for detecting a leak in a pipeline system (10) for a fluid, the fluid being supplied to the pipeline system (10) by means of a supply line (16) from an upstream pressure-maintaining system, wherein at least one extraction point (14) for the fluid being provided in the pipeline system (10), comprising
- a flow rate measuring unit (18) which is arranged in the supply line (16), and
- a data processing unit (19) which is connected to the flow rate measuring unit (18),
wherein the flow rate measuring unit (18) measures the mass and/or volume flow rate of fluid through the supply line (16) continuously or at least at pre-determinable time intervals and transmits the measured values of the mass and/or volume flow to the data processing unit (19),
**characterized in that** the data processing unit (19) is configured such that at least one monitoring state SMARTLOCK and one monitoring state OPEN are distinguished, and **in that**, in each of the states SMARTLOCK and OPEN, a current mass and/or volume discharge (V₄₁, V₄₂, V_{43A}) of the fluid flowing through the supply line (16) can be determined on the basis of the measured values of the mass and/or volume flow rate from a time point at which the measured mass and/or volume flow rate exceeds a pre-determinable first minimum flow rate value (MIN), and as long as the measured mass and/or volume flow rate does not fall below a predeterminable second minimum flow rate value (MIN),
wherein the data processing unit (19) is further configured such that
• in the OPEN state, a pre-determinable first warning message is output by the data processing unit (19) if the current mass and/or volume discharge (V₄₂) exceeds a pre-determinable first discharge limit value,
• in the SMARTLOCK state, a pre-determinable second warning message is output by the data processing unit (19) if the current mass and/or volume discharge (V₄₁, V_{43A}) exceeds a pre-determinable second discharge limit value (V_{MAX}), the second discharge limit value (V_{MAX}) being smaller than the first discharge limit value,
• an automatic transition from the SMARTLOCK state to the OPEN state takes place if after exceeding the first minimum flow rate value (MIN) the mass and/or volume flow rate currently measured by the flow rate measuring unit (18) subsequently falls below the second minimum flow rate value (MIN) and the current mass and/or volume discharge (V₄₁) is smaller than the second discharge limit value (V_{MAX}), wherein the SMARTLOCK state being adopted when the device is started.

2. The device according to claim 1, **characterized in that** the data processing unit (19) is configured such that an automatic transition from the OPEN state to the SMARTLOCK state takes place if a pre-determinable second time interval has elapsed since the mass and/or volume flow rate currently measured by the flow rate measuring unit (18) falls below the second minimum flow rate value (MIN) without exceeding the first minimum flow rate value.

3. The device according to any one of the preceding claims, **characterized in that** in the OPEN state and/or in the SMARTLOCK state, a pre-determinable third warning message is additionally output if a pre-determinable third time interval has elapsed since the time point at which the mass and/or volume flow rate exceeds the first minimum flow rate value (MIN), and if the flow rate has not fallen below the second minimum flow rate value (MIN) since this time point.

4. The device according to any one of the preceding claims, **characterized in** an actuating unit by means of which the OPEN state is manually activatable by a user and/or a warning message is manually confirmable by the user.

5. The device according to any one of the preceding claims, **characterized in that** the data processing means (19) is provided with learning algorithm such that at least one parameter of the group of parameters comprising the time interval of the measurement of the mass and/or volume flow rate by the flow rate measuring unit, the first minimum flow rate value (MIN), the second minimum flow rate value (MIN), the first warning message, the second warning message, the third warning message, the first discharge limit value, the second discharge limit value (V_{MAX}), the second time interval and the third time interval is automatically adjustable on the basis of the detected behavior of the pipeline system (10).

6. The device according to any one of the preceding claims, **characterized in that** signals "1" and "0" are transmittable to the data processing unit (19) by the user by a targeted discharge operation, wherein the transmitted signals being evaluated by means of the data processing unit (19).

7. Method for detecting a leak in a pipeline system (10) for a fluid, the fluid being supplied to the pipeline system (10) by means of a supply line from an upstream pressure-maintaining system, at least one extraction point (14) for the fluid being provided in the pipeline system (10),
**characterized in that** at least one monitoring state SMARTLOCK and one monitoring state OPEN are distinguished, comprising the following steps:
• Measurement of the mass and/or volume flow rate of fluid through the supply line (16) continuously or at least at predeterminable time intervals,
• Determination in each of the SMARTLOCK and OPEN states of a mass and/or volume discharge (V₄₁, V₄₂, V_{43A}) of the fluid that has flowed through the supply line (16), based on the measured values of the mass and/or volume flow rate from a time point at which the measured mass and/or volume flow rate exceeds a pre-determinable first minimum flow rate value (MIN), and as long as the measured mass and/or volume flow rate does not fall below a second minimum flow rate value (MIN),
• Output of a pre-determinable first warning message in the state OPEN, if the current mass and/or volume discharge (V₄₂) exceeds a pre-settable first discharge limit value,
• Output of a pre-determinable second warning message in the SMARTLOCK state if the current mass and/or volume discharge (V₄₁, V_{43A}) exceeds a pre-determinable second discharge limit value (V_{MAX}), the second discharge limit value (V_{MAX}) being smaller than the first discharge limit value,
• automatic transition from the SMARTLOCK state to the OPEN state if, after exceeding the first minimum flow rate value (MIN), the mass and/or volume flow rate currently measured by the flow rate measuring unit (18) subsequently falls below the second minimum flow rate value (MIN) and the current mass and/or volume discharge (V₄₁) is smaller than the second discharge limit value (V_{MAX}), wherein the method being started in the SMARTLOCK state.

8. The method according to claim 7, **characterized in that** an automatic transition from the OPEN state to the SMARTLOCK state takes place if a pre-determinable second time interval has elapsed since the mass and/or volume flow rate currently measured by the flow rate measuring unit (18) fell below the second minimum flow rate value without exceeding the first minimum flow rate value.

9. The method according to any one of the claims 7 to 8, **characterized in that** in the OPEN state and/or in the SMARTLOCK state, a predeterminable third warning message is additionally output if a pre-determinable third time interval has elapsed since the time point at which the mass and/or volume flow rate exceeds the first minimum flow rate value (MIN), and if the flow rate has not fallen below the second minimum flow rate value (MIN) since this time point.

10. The method according to any one of claims 7 to 9, **characterized in that** a user manually activates the transition from the SMARTLOCK state to the OPEN state and/or confirms a warning message.

11. The method according to any one of claims 7 to 10, **characterized in that** at least one parameter of the group of parameters comprising the time interval of the measurement of the mass and/or volume flow rate by the flow rate measuring unit, the first minimum flow rate value (MIN), the second minimum flow rate value (MIN), the first warning message, the second warning message, the third warning message, the first discharge limit value, the second discharge limit value (V_{MAX}), the second time interval and the third time interval is automatically adjusted based on the detected behavior of the piping system (10).

12. The method according to any one of claims 7 to 11, **characterized in that** a transmission of signals "1" and "0" to the data processing unit (19) is carried out by the user by a targeted discharge operation, the transmitted signals being evaluated by means of the data processing unit (19).

13. Computer program product comprising instructions which, when the program is executed by a computer, cause the computer to perform the following procedure,
**characterized in that** at least one monitoring state SMARTLOCK and one monitoring state OPEN are distinguished and wherein a SMARTLOCK state is adopted in the initial state:
• Receiving measured values of the mass and/or volume flow rate of a fluid through a supply line (16) for a pipe system (10) connecting thereto,
• Determination in each of the SMARTLOCK and OPEN states of a mass and/or volume flow rate (V₄₁, V₄₂, V_{43A}) of the fluid based on the measured values of the mass and/or volume flow rate from a time point at which the measured mass and/or volume flow rate exceeds a pre-determinable first minimum flow rate value (MIN), and as long as the measured mass and/or volume flow rate does not fall below a second minimum flow rate value (MIN),
• Output of a pre-determinable first warning message in the state OPEN, if the current mass and/or volume discharge (V₄₂) exceeds a pre-settable first discharge limit value,
• Output of a pre-determinable second warning message in the SMARTLOCK state if the current mass and/or volume discharge (V₄₁, V_{43A}) exceeds a predeterminable second extraction limit value (V_{MAX}), the second discharge limit value (V_{MAX}) being smaller than the first discharge limit value,
• automatic transition from the SMARTLOCK state to the OPEN state if, after exceeding the first minimum flow rate value (MIN), the mass and/or volume flow rate currently measured by the flow rate measuring unit (18) subsequently falls below the second minimum flow rate value (MIN) and the current mass and/or volume discharge is smaller than the second discharge limit value (V_{MAX}).

14. Computer-readable storage medium comprising instructions which, when the program is executed by a computer, cause the computer to execute the method of any one of claims 7 to 12.

## Revendications

1. Dispositif d'identification d'une fuite dans un système de conduite (10) pour un fluide, sachant que le fluide est acheminé au système de conduite (10) au moyen d'une conduite d'alimentation (16) d'un système recevant de la pression, monté en amont, sachant que dans le système de conduite (10) au moins un point de prélèvement (14) pour le fluide est prévu, comportant
- un dispositif de mesure de débit (18), lequel est disposé dans la conduite d'alimentation (16), et
- un système de traitement des données (19), lequel est relié au dispositif de mesure de débit (18),
sachant que le dispositif de mesure de débit (18) mesure en continu ou au moins à des intervalles de temps prédéfinissables le débit massique et/ou volumique en fluide à travers la conduite d'alimentation (16) et transmet les valeurs mesurées du débit massique et/ou volumique au système de traitement des données (19),
**caractérisé en ce que** le système de traitement des données (19) est agencé de telle manière qu'au moins un état de surveillance SMARTLOCK et un état de surveillance OUVERT sont différents et **en ce que** dans chacun des états SMARTLOCK et OUVERT, un prélèvement massique et/ou volumique (V₄₁, V₄₂, V_{43A}) actuel de fluide, traversant la conduite d'alimentation (16) peut être déterminé en se basant sur les valeurs mesurées du débit massique et/ou volumique à partir d'un moment auquel le débit massique et/ou volumique mesuré dépasse une première valeur de débit minimale (MIN) prédéfinissable et tant que le débit massique et/ou volumique mesuré ne dépasse pas inférieurement une deuxième valeur de débit minimale (MIN) prédéfinissable,
sachant que le système de traitement des données (19) est en plus agencé de telle sorte qu'
• à l'état OUVERT, une édition d'un premier message d'avertissement prédéfinissable a lieu par le système de traitement des données (19), lorsque le prélèvement massique et/ou volumique actuel (V₄₂) dépasse une première valeur limite de prélèvement prédéfinissable,
• à l'état SMARTLOCK, une édition d'un deuxième message d'avertissement prédéfinissable a lieu par le système de traitement des données (19), lorsque le prélèvement massique et/ou volumique actuel (V₄₁, V_{43A}) dépasse une deuxième valeur limite de prélèvement (V_{MAX}) prédéfinissable, sachant que la deuxième valeur limite de prélèvement (V_{MAX}) est plus petite que la première valeur limite de prélèvement,
• un transfert automatique de l'état SMARTLOCK à l'état OUVERT a lieu ensuite, lorsque le débit massique et/ou volumique mesuré actuellement par le dispositif de mesure de débit (18) est dépassé inférieurement après dépassement de la première valeur de débit minimale (MIN) ultérieurement à la deuxième valeur de débit minimale (MIN) et le prélèvement massique et/ou volumique actuel (V₄₁) est plus petit que la deuxième valeur limite de prélèvement (V_{MAX}), sachant qu'au démarrage du dispositif l'état SMARTLOCK est adopté.

2. Dispositif selon la revendication 1, **caractérisé en ce que** le système de traitement des données (19), est agencé de telle manière qu'un transfert automatique de l'état OUVERT à l'état SMARTLOCK a lieu ensuite, lorsqu'un deuxième intervalle de temps prédéfinissable est écoulé depuis le dépassement inférieur du débit massique et/ou volumique mesuré actuellement par le dispositif de mesure de débit (18) sous la deuxième valeur de débit minimale (MIN) sans dépassement de la première valeur de débit minimal.

3. Dispositif selon l'une quelconque des revendications précédentes, **caractérisé en ce qu'**à l'état OUVERT et/ou à l'état SMARTLOCK, une émission d'un troisième message d'avertissement prédéfinissable a lieu en plus ensuite, lorsque depuis le moment auquel le débit massique et/ou volumique dépasse la première valeur de débit minimale (MIN), un troisième intervalle de temps prédéfinissable est écoulé et lorsque depuis ce moment, la deuxième valeur de débit minimale (MIN) n'a pas été dépassée inférieurement.

4. Dispositif selon l'une quelconque des revendications précédentes, **caractérisé par** un système de commande au moyen duquel l'état OUVERT peut être manuellement activé par un utilisateur et/ou un message d'avertissement peut être actionné manuellement par l'utilisateur.

5. Dispositif selon l'une quelconque des revendications précédentes, **caractérisé en ce que** le système de traitement des données (19), est équipé d'un algorithme d'apprentissage de telle sorte qu'au moins un paramètre du groupe de paramètres comprenant l'intervalle de temps de la mesure du débit massique et/ou volumique, peut être automatiquement adapté par le dispositif de mesure de débit, à la première valeur de débit minimale (MIN), à la deuxième valeur de débit minimale (MIN), au premier message d'avertissement, au deuxième message d'avertissement, au troisième message d'avertissement, à la première valeur limite de prélèvement, à la deuxième valeur limite de prélèvement (V_{MAX}) , au deuxième intervalle de temps et au troisième intervalle de temps à l'aide du comportement détecté du système de conduite (10).

6. Dispositif selon l'une quelconque des revendications précédentes, **caractérisé en ce que** les signaux « 1 » et « 0 » peuvent être transmis au système de traitement des données (19) par l'utilisateur par un comportement de prélèvement précis, sachant que les signaux transmis sont exploités au moyen du système de traitement des données (19).

7. Procédé de détection d'une fuite dans un système de conduite (10) pour un fluide, sachant que le fluide est acheminé au système de conduite (10) au moyen d'une conduite d'alimentation d'un système recevant de la pression, monté en amont, sachant qu'au moins un point de prélèvement (14) pour le fluide est prévu dans le système de conduite (10),
**caractérisé en ce qu'**au moins un état de surveillance SMARTLOCK et un état de surveillance OUVERT sont différents, comportant les étapes suivantes :
• mesure du débit massique et/ou volumique en fluide à travers la conduite d'alimentation (16) en continu ou au moins à des intervalles de temps prédéfinissables,
• détermination dans chacun des états SMARTLOCK et OUVERT d'un prélèvement massique et/ou volumique (V₄₁, V₄₂, V_{43A}) de fluide passé par la conduite d'alimentation (16) en se basant sur les valeurs mesurées du débit massique et/ou volumique à partir d'un moment auquel le débit massique et/ou volumique mesuré dépasse une première valeur de débit minimale (MIN) prédéfinissable et tant que le débit massique et/ou volumique mesuré ne dépasse pas inférieurement une deuxième valeur de débit minimale (MIN),
• édition d'un premier message d'avertissement prédéfinissable dans l'état OUVERT, lorsque le prélèvement massique et/ou volumique actuel (V₄₂) dépasse une première valeur limite de prélèvement prédéfinissable,
• édition d'un deuxième message d'avertissement prédéfinissable dans l'état SMARTLOCK, lorsque le prélèvement massique et/ou volumique actuel (V₄₁, V_{43A}) dépasse une deuxième valeur limite de prélèvement prédéfinissable (V_{MAX}), sachant que la deuxième valeur limite de prélèvement (V_{MAX}) est plus petite que la première valeur limite de prélèvement,
• transfert automatique de l'état SMARTLOCK à l'état OUVERT ensuite, lorsqu'après dépassement de la première valeur de débit minimale (MIN) ultérieurement le débit massique et/ou volumique mesuré actuellement par le dispositif de mesure de débit (18) dépasse inférieurement la deuxième valeur de débit minimale (MIN) et le prélèvement massique et/ou volumique (V₄₁) actuel est plus petit que la deuxième valeur limite de prélèvement (V_{MAX}), sachant que le procédé est mis en marche à l'état SMARTLOCK.

8. Procédé selon la revendication 7, **caractérisé en ce qu'**un transfert automatique de l'état OUVERT à l'état SMARTLOCK a lieu ensuite, lorsqu'un deuxième intervalle de temps prédéfinissable est écoulé, depuis le dépassement du débit massique et/ou volumique mesuré actuellement par le dispositif de mesure de débit (18) sous la deuxième valeur de débit minimale sans dépassement de la première valeur de débit minimale.

9. Procédé selon l'une quelconque des revendications 7 à 8, **caractérisé en ce que** dans l'état OUVERT et/ou dans l'état SMARTLOCK, a lieu en plus ensuite une édition d'un troisième message d'avertissement prédéfinissable, lorsque depuis le moment auquel le débit massique et/ou volumique dépasse la première valeur de débit minimale (MIN), un troisième intervalle de temps prédéfinissable est écoulé et lorsque depuis ce moment la deuxième valeur de débit minimale (MIN) n'a pas été dépassée inférieurement.

10. Dispositif selon l'une quelconque des revendications 7 à 9, **caractérisé en ce qu'**un utilisateur active manuellement le transfert de l'état SMARTLOCK à l'état OUVERT et/ou actionne un message d'avertissement.

11. Procédé selon l'une quelconque des revendications 7 à 10, **caractérisé en ce qu'**au moins un paramètre du groupe de paramètres comprenant l'intervalle de temps de la mesure du débit massique et/ou volumique est automatiquement adapté par le système de mesure de débit, à la première valeur de débit minimale (MIN), à la deuxième valeur de débit minimale (MIN), au premier message d'avertissement, au deuxième message d'avertissement, au troisième message d'avertissement, à la première valeur limite de prélèvement, à la deuxième valeur limite de prélèvement (V_{MAX}), au deuxième intervalle de temps et au troisième intervalle de temps à l'aide du comportement détecté du système de conduite (10).

12. Procédé selon l'une quelconque des revendications 7 à 11, **caractérisé en ce qu'**une transmission des signaux « 1 » et « 0 » au système de traitement des données (19) a lieu par l'utilisateur par un comportement de prélèvement ciblé, sachant que les signaux transmis sont exploités au moyen du système de traitement des données (19).

13. Produit de programme informatique comprenant des ordres, qui lors de l'exécution du programme par un ordinateur ordonnent à celui-ci d'exécuter le procédé suivant,
**caractérisé en ce qu'**au moins un état de surveillance SMARTLOCK et un état de surveillance OUVERT sont différents et sachant qu'à l'état initial, un état SMARTLOCK est adopté :
• réception des valeurs mesurées du débit massique et/ou volumique d'un fluide à travers une conduite d'alimentation (16) pour un système de conduite (10) s'y raccordant,
• détermination dans chacun des états SMARTLOCK et OUVERT d'un prélèvement massique et/ou volumique (V₄₁, V₄₂, V_{43A}) de fluide écoulé, en se basant sur les valeurs mesurées du débit massique et/ou volumique à partir d'un moment auquel le débit massique et/ou volumique mesuré dépasse une première valeur de débit minimale (MIN) prédéfinissable et tant que le débit massique et/ou volumique mesuré ne dépasse pas inférieurement une deuxième valeur de débit minimale (MIN),
• édition d'un premier message d'avertissement prédéfinissable dans l'état OUVERT, lorsque le prélèvement massique et/ou volumique actuel (V₄₂) dépasse une première valeur limite de prélèvement prédéfinissable,
• édition d'un deuxième message d'avertissement prédéfinissable dans l'état SMARTLOCK, lorsque le prélèvement massique et/ou volumique actuel (V₄₁, V_{43A}) dépasse une deuxième valeur limite de prélèvement (V_{MAX}) prédéfinissable, sachant que la deuxième valeur limite de prélèvement (V_{MAX}) est plus petite que la première valeur limite de prélèvement,
• transfert automatique de l'état SMARTLOCK à l'état OUVERT ensuite, lorsqu'après dépassement de la première valeur de débit minimale (MIN) ultérieurement le débit massique et/ou volumique actuellement mesuré par le dispositif de mesure de débit (18) dépasse inférieurement la deuxième valeur de débit minimale (MIN) et le prélèvement massique et/ou volumique actuel est plus petit que la deuxième valeur limite de prélèvement (V_{MAX}).

14. Moyen de mémorisation lisible sur ordinateur comprenant des ordres, qui lors de l'exécution du programme par un ordinateur ordonnent à celui-ci d'exécuter le procédé selon l'une quelconque des revendications 7 à 12.
